# EUROPÄISCHE PATENTANMELDUNG

(11) **EP 0 838 305 A1**
(43) Veröffentlichungstag der Anmeldung: **29.04.1998**
(21) Anmeldenummer: 97118392.6
(22) Anmeldetag: 23.10.1997
(51) Int. Cl.: B23Q 17/22

(54) **Verfahren und Vorrichtung zur Vorbereitung von Werkstücken auf die mechanische Bearbeitung der Einzel- und Kleinserienfertigung**

(30) Priorität: 28.10.1996 DE 19644704; 15.10.1997 DE 19745471
(71) Anmelder: Preussag Stahl Aktiengesellschaft, 31226 Peine (DE)
(72) Erfinder: Bewarder, Wilhelm G. Dipl.-Ing, 38259 Salzgitter (DE)
(74) Vertreter: Lüdtke, Frank

(57) **Zusammenfassung**

Die Erfindung betrifft ein Verfahren und eine Vorrichtung zur Vorbereitung von Werkstücken für die Einzel- und Kleinserienfertigung. Die Werkstücke werden nach der Maßkontrolle, in der ermittelt wird, ob das Fertigteil im Rohteil enthalten ist, in der Bearbeitungsmaschine nach den in der Maßkontrolle angebrachten Markierungen (Anrisse, Körner, Bohrungen) ausgerichtet. Dieses Ausrichten der Bearbeitungsmaschine vermindert die Kapazität. Aufgabe der Erfindung ist es, daß Rohteil so für die Bearbeitung in der Bearbeitungsmaschine vorzubereiten, daß das Rohteil mit geringstmöglichem Aufwand in der Bearbeitungsmaschine ausgerichtet werden kann. Gelöst wird diese Aufgabe durch das Anbringen von Auf- und Anlageflächen am Rohteil, welche im Vorbereitungszentrum zur Lage des Fertigteils im Rohteil achsparallel und maßgenau bearbeitet werden.

## Beschreibung

Die Erfindung betrifft ein Verfahren und eine Vorrichtung zur Vorbereitung von insbesondere großen Werkstücken für die mechanische Bearbeitung.

In jeder Fertigung, insbesondere für Werkstücke des Maschinen- und Anlagenbaus, besteht folgende Systematik:
a) das Rohteil wird z.B. durch Schweißen, Gießen oder Schmieden hergestellt;
b) an dem Rohteil wird durch Maßkontrollen sichergestellt, daß die Endform (Fertigteil) in dem Rohteil enthalten ist, um Kosten durch Fertigungsschritte zu vermeiden, welche durch späteres Verwerten (Ausschuß) des Werkstückes angefallen wären;
c) das für die Bearbeitung freigegebene Rohteil wird auf der Bearbeitungsmaschine des ersten Bearbeitungsschrittes aufgespannt und bearbeitet.

In dieser Systematik unterscheiden sich Prinzipien und Methoden der einzelnen Schritte nach den technischen Erfordernissen des Produktes und nach betriebswirtschattlichen Erwägungen. Ein wesentliches Merkmal ist die Stückzahl, in der das Fertigteil erzeugt werden soll, ein weiteres die Größe des Fertigteils bzw. des Rohteils.

Nach der Stückzahl wird die Fertigung unterschieden in:
- Einzel- und Wiederholteil,
- Kleinserien-,
- Großserien-Fertigung.

Bei der Erfindung geht es um die Bearbeitung von Werkstücken der Einzelund Kleinserienfertigung.

Im Regelfall wird die Maßkontrolle zusammengefaßt mit der Festlegung der Lagen der x-, y- und z-Koordinaten, d.h. den Ausgangsmaßen für den ersten Bearbeitungsschritt. Dazu wird die Maßhaltigkeit des Werkstückes und die Lage des Fertigteils im Rohteil durch Anriß (auch durch Körnen, Bohren) nach dem Ausrichten auf der Anreißplatte (der Anreißmaschine) festgestellt. Der Anriß definiert die x-, y- und z-Koordinaten des Werkstücks.

Aus DE 44 01 212 ist ein Verfahren zum Vermessen, Schleifen und spanabhebenden Bearbeiten von Rohgußstücken bekannt. Für das Verfahren ist vorgesehen, das Gußstück auf einer Palette zu fixieren, und die so gebildete Einheit Palette / Gußstück entsprechend den Vorgaben für die Bearbeitung an einem Meßplatz zu vermessen (die ermittelten Meßergebnisse werden auf einem der Palette zugeordneten elektronischen Datenträger gespeichert). Daran anschließend wird die Einheit Palette / Gußstück auf eine Palettenaufnahme eines ersten Bearbeitungzentrums aufgesetzt (Daten werden eingelesen). Anschließend werden an einer Seite des Gußstückes mind. 3 kalottenförmige Vertiefungen angebracht. Daran anschließend werden in einem zweiten Schritt Schleifarbeitsgänge durchgeführt.

Durch das Anbringen der kalottenförmigen Vertiefungen kann das Gußstück für die Endbearbeitung in zugeordneter Aufnahmezapfen eines zweiten Bearbeitungszentrums aufgespannt und bearbeitet werden. Hierdurch entfällt das sonst notwendige aufwendige Ausrichten des Werkstückes auf der Spannfläche des Endbearbeitungszentrums. Das Ausrichten bestand zuvor darin, daß die Anrißlinien (Körner, Bohrungen) der Maßkontrolle mit Hilfe der x-, y- und z- Fahrbewegungen der Bearbeitungsmaschine in die Maschinenkoordinaten eingepaßt wurde. Hierbei muß berücksichtigt werden, daß mit steigenden Werkstückgrößen -, gewichten und mit steigender Kompliziertheit der Werkstückform der Zeitverbrauch für das Ausrichten steigt. Da das Ausrichten in dem Bearbeitungszentrum selbst erfolgt, verringert dies die Kapazität und steigert die Kosten

Aufgabe der Erfindung ist es, die 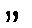 Span zu Span" - Zeiten von einem zum nächsten Werkstück der Bearbeitungsmaschine, also u.a. auch alle Arbeitsvorgänge, im Zusammenhang mit dem Ausrichten und Spannen sowie das Einfahren der Maschine auf ein Minimum zu reduzieren.

Der vorliegenden Erfindung geht es, anders als in DE 44 01 212, nicht um eine Massenfertigung von normal handhabbaren Teilen, wie z.B. Achsbrücken für Lastkraftwagen, sondern um große Werkstücke, bei welchen es sich typischerweise um Einzel- und Kleinserienfertigung handelt. Große Werkstücke im Sinne der vorliegenden Erfindung weisen in allen 3 Raumrichtungen typischerweise Abmessungen von mehreren Metern auf (z.B. 7 x 5 x 3m). Ein typisches Werkstückgewicht bei dieser Größe liegt in der Größenordnung von z.B. 100 t. Die Werkstücke können im praktischen Betrieb nicht engros auf Paletten gespannt und mit diesen als Einheit in eine Palettenaufnahme eines Bearbeitungszentrums übergeben werden.

Gelöst wird diese Aufgabe durch ein Verfahren bzw. eine Vorrichtung zur Vorbereitung von Werkstücken in Einzel- und Kleinserienfertigung. Hinsichtlich des Verfahrens ist, zunächst in ansich bekannter Weise vorgesehen, daß das Rohteil auf Maßhaltigkeit kontrolliert wird, d.h. durch das Vermessen der Konturen des Rohteiles wird ermittelt, ob das Fertigteil vollständig im Rohteil enthalten ist. Dabei wird automatisch festgestellt, in welcher Lage das Fertigteil im Rohteil räumlich angeordnet ist. Um die Lage des Fertigteils im Rohteil für ein nachfolgend angeordnetes Meßsystem wieder auffindbar zu machen, werden am Rohteil Bezugsmeßpunkte angebracht, so daß ein eindeutiger maßlicher Zusammenhang zwischen den Bezugsmeßpunkten und der Lage des Fertigteils im Rohteil besteht.

Um das Teil in x-, y-, z-Richtung eindeutig zu charakterisieren, sind auf dem Teil mindestens drei Bezugsmeßpunkte anzubringen. Diese Bezugsmeßpunkte müssen durch die Sensoren der Meßeinrichtung erfaßbar sein und können Erhebungen, beispielsweise Kugeln oder auch andere Markierungen, auf der Oberfläche des Rohteiles sein. Zur eindeutigen Markierung und Erfassung der Raumlage des Rohteiles sind mindestens drei Bezugspunkte nötig.

Weiterhin sind am Rohteil Auflage- und Anlageflächen nötig. Diese können an das Rohteil angeklebt, angeschweißt oder auf andere Weise mit dem Rohteil fest verbunden werden.

Dazu ist es vorteilhaft, wenn das Rohteil auf mehreren, vorzugsweise drei Stützelementen liegt, also von allen Seiten zugänglich ist.

Um eine genaue Lage des Rohteiles bei der Bearbeitung zu ermöglichen, ist es notwendig, wenigstens sieben Auf- und Anlageflächen anzubringen, wobei vier auf einer Seite, zwei auf einer anderen Seite und eine auf einer dritten Seite anzubringen sind.

Versehen mit den Bezugsmeßpunkten werden Auflage- bzw. Anlageflächen am Rohteil durch eine Bearbeitungseinheit auf Maß gebracht. Dazu wird das Werkstück in den Meß- und Arbeitsbereich einer Meßeinrichtung und einer Bearbeitungseinrichtung gebracht. Mit Hilfe der Meßeinrichtung werden die Bezugsmeßpunkte am Werkstück mit Bezug auf die Meßebenen bestimmt.

Darauf erfolgt mit der gleichen Meßeinrichtung des Einmessen von Maßpunkten an der Bearbeitungseinheit. Hieraus ist einerseits bekannt die Lage des Fertigteils relativ zur Meßeinrichtung, andererseits die Lage der Bearbeitungseinrichtung relativ zur Meßeinrichtung bekannt. Aus diesen Daten kann über eine Datenerfassungs-, übertragungs- und verarbeitungseinrichtung die räumliche Lage des Fertigteils relativ zur Bearbeitungseinrichtung bestimmt werden.

Im nächsten Schritt wird die Bearbeitungseinrichtung achsenparallel zu der Lage des Fertigteils im Rohteil eingestellt. Dies kann über entsprechende Stelleinrichtungen an der Bearbeitungseinrichtung mittels der vorhandenen Datenverarbeitungseinrichtung erfolgen.

Alternativ zur Ausrichtung der Bearbeitungseinrichtung auf das Fertigteil im Rohteil kann das Rohteil durch geeignete Stelleinrichtungen an einem Stützelement ausgerichtet werden.

Insbesondere kann sowohl eine Ausrichtung der Bearbeitungseinrichtung auf das Fertigteil im Rohteil als auch eine Ausrichtung des Rohteils selbst durch geeignete Stelleinrichtungen erfolgen.

Es kann auch zum Beispiel das Rohteil auf einem Drehtisch oder Kippstuhl o.ä. von einer zur nächsten Auflage- oder Anlageflächenbearbeitung vor die Bearbeitungseinheit bewegt werden. Dadurch kann die Bearbeitungseinheit bzw. das Vorbereitungszentrum kompakter gestaltet werden.

Nach der achsparallelen Ausrichtung von Bearbeitungseinheit und Fertigteil erfolgt die Abbildung der Soll-Lage des Fertigteils auf die Rohteilaußenflächen durch trennende, schleifende oder sonstige Bearbeitung am Rohteil, wobei an geeigneten Stellen des Rohteiles die Auflage- bzw. Anlageflächen auf Maß gebracht werden.

Im Prinzip geht es bei der Erfindung darum, zwei im Raum befindliche Körper in definierter Weise zueinander zu positionieren. Der eine Körper ist das im Rohteil liegende Fertigteil. Der zweite Körper ist die Bearbeitungseinheit. Um diese beiden Körper in eine achsenparallele Stellung zu bringen, ist einer von beiden durch geeignete Stellelemente aus seiner Ist-Position in die gewünschte Soll-Position mit definierter Genauigkeit zu verschieben. Dabei wird an die Standfläche unter den Körpern in Bezug auf Lage und Ebenheit keine Anforderung gestellt. Außer, daß während der Messung und Bearbeitung keine Veränderung stattfinden soll. Ein tragfähiger Boden, im Regelfall eine hallenübliche Betonfläche, reicht aus. Auf dieser Fläche wird das Rohteil auf, z.B. 3 oder mehr Auflagen je nach Werkstückkonfiguration gelegt. Hierdurch ist das Rohteil an seiner Unterseite, soweit für die Anbringung der Auflageflächen notwendig, zugänglich. Das Rohteil ist somit hinsichtlich der Auf- und Anlageflächen im Arbeitsbereich der Bearbeitungseinheit.

Die Bearbeitungseinheit kann z.B. eine fahrbare Einheit sein, die auf 3 Standbeine absetzbar ist, welche durch Stellelemente in ihrer Höhe einstellbar sind.

Mit der Meßeinheit kann die Lage des Rohteils im Raum, aber auch bezogen auf die Lage der Meßeinheit, mit Hilfe der am Werkstück angebrachten Bezugsmeßpunkte, eingemessen werden. Außerdem kann mit der Meßeinheit die Lage der Bearbeitungseinheit im Raum mit den an dieser angebrachten Meßpunkten bestimmt werden. Mit diesen Daten der Meßeinheit kann die Ist-Lage von Rohteil und Bearbeitungseinheit bestimmt werden. Hierzu ist eine Datenverarbeitungseinheit mit geeigneter Software vorgesehen, welche die erforderliche Verstellung der Bearbeitungseinheit über geeignete Stellelemente bewirkt. Die Bearbeitungseinheit trägt einen Schlitten für das Bearbeitungswerkzeug. Der Schlitten führt den linearen Vorschub der Werkzeuge im Bearbeitungsvorgang aus. Der Schlitten ist auf einem Kreuzsupport angebracht und zusätzlich in einer Führung drehbar gelagert. Durch den Kreuzsupport und die drehbare Lagerung kann die maßliche Feineinstellung für das Herstellen der Anlageflächen erfolgen, während durch die Verstellung, z.B. der 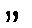 Standbeine", die Maße der Auflageflächen definiert werden. Die Bewegungen des Schlittens sowie der Stellelemente sind durch die Meßeinrichtung steuerbar.

In der Datenverarbeitungeinheit werden die durch die Maßkontrolle festgestellten Werkstückmaße eingelesen. In diesem Datensatz sind sowohl die Koordinaten der Bezugsmeßpunkte, welche für die Definition der Lage des Fertigteils im Rohteil entscheidend sind, als auch die Soll-Fertigmaße der Auflage- und Anlageflächen enthalten. Von der Meßeinheit werden einerseits die Maßpunkte des Rohteils, andererseits die Maßpunkte der Bearbeitungseinheit erfaßt und in die Datenverarbeitungseinheit eingegeben. Diese gleicht die relevanten Maße ab und stellt über die entsprechenden Stellelemente der Bearbeitungseinheit die Soll-Maße der Auflage- und Anlagepunkte nacheinander für das Bearbeitungswerkzeug ein. Die am Rohteil noch im Rohzustand vorhandenen Auf- und Anlageflächen können anschließend auf das Soll-Maß bearbeitet werden. Zur Kontrolle können die vorgesehenen Auflage- und Anlagepunkte mit der verfahrbaren Bearbeitungseinheit manuell angefahren und fixiert, Werkstück und Bearbeitungseinheit mit der Meßeinheit eingemessen und das Werkzeug über Meßeinheit und Datenverarbeitungseinrichtung justiert und dann die Auflage- und Anlageflächen hergestellt werden.

Die Bearbeitungseinheit führt die Bearbeitung der Auf- und Anlageflächen, bevorzugt mit kleinen Zerspanungskräften (Trennschleifen oder Sägen) oder durch entsprechende Verfahren (z.B. mit Elektronensstrahl, Laser o.ä.), durch.

Zweckmäßigerweise können Lage und Ausbildung der Auf- und Anlagepunkte bereits bei der Konstruktion oder in der Fertigungsplanung definiert werden. Als Randbedingungen für diese Definition sind das Gewicht, die Form des Werkstückes, die Endbearbeitungstechnologie, die angewandte Meßtechnik sowie die Technik der Bearbeitungseinrichtung zur Anbringung der Auf- und Anlageflächen zu berücksichtigen. Ebenfalls in der Fertigungsplanung ist die zweckmäßige Lage der Bezugsmeßpunkte am Rohteil mit Blick auf die angewandte Meßtechnik so zu wählen, daß das Einrichten der Bearbeitungseinheit mit Hilfe der Meßeinheit möglich ist, d.h. die Anzahl und Lage der Bezugsmeßpunkte wird werkstückspezifisch durchdacht. Der in der Abnahme (Maßkontrolle des Rohteils incl. der drei-dimensionalen Vermaßung der Bezugsmeßpunkte) entstehende Datensatz mit der Definition des in dem Rohteil enthaltenden Fertigteils sowie der Vermaßung der Auf- und Anlageflächen ist die Grundlage für den Arbeitsablauf des aus Meßeinrichtung, Bearbeitungseinheit und Datenverarbeitungseinrichtung bestehenden Vorbereitungszentrums für die Anbringung der Auf- und Anlageflächen.

Mit dem erfindungsgemäßen Verfahren bzw. der erfindungsgemäßen Vorrichtung wird das Ausrichten und Spannen auf der Bearbeitungsmaschine auf ein Minimum reduziert, damit werden auch Sekundärziele, wie z.B. die Kapazitätserhöhung, die Engpasserweiterung, die Flexibilisierung, die Organisationsverbesserung und die erweiterte Planbarkeit gleichzeitig berücksichtigt.

Sind nacheinander z.B. 4 Auflageflächen (in z-Richtung), 2 Anlageflächen (in x-Richtung) und eine Anlagefläche (in y-Richtung) angearbeitet, so ist das Werkstück in z-Richtung maßgenau auf der Spannfläche, in x- und y-Richtung an die auf der Spannfläche vorbereiteten und maßlich definierten Anschlagflächen auf- bzw. anlegbar, ohne daß es einer Ausrichtarbeit auf der Bearbeitungsmaschine bedarf.

Nachfolgend wird die Erfindung an 5 Figuren und einem Ausführungsbeispiel näher erläutert.

Die Figuren zeigen:
- Fig. 1: Bearbeitungseinheit neben einem Rohteil auf drei Stützelementen,
- Fig. 2: Einzelheit A von Fig. 1,
- Fig. 3 - 5: Bearbeitungseinheit in verschiedenen Ansichten

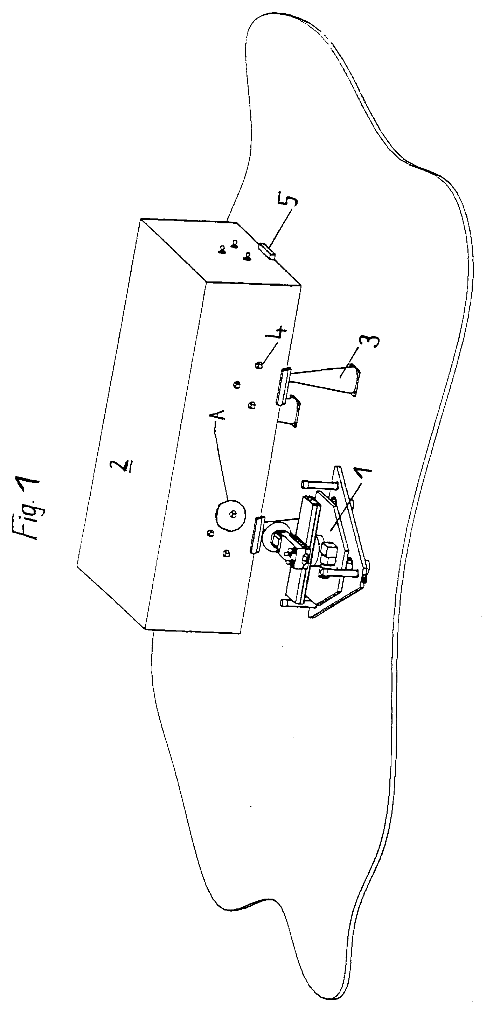

Die Fig. 1 zeigt eine Bearbeitungseinheit 1 neben einem Rohteil 2 auf drei feststehenden Stützelementen 3, wobei am Rohteil 1 auf zwei Flächen sichtbar drei Gruppen von jeweils drei Bezugsmeßpunkten 4 angeordnet sind. Weiterhin sind an den Kanten des Rohteiles 1 Auf- und Anlageflächen 5 angeordnet, mit denen das Rohteil 1 bei der Weiterbearbeitung auf die weiterbearbeitende Maschine eingerichtet wird.

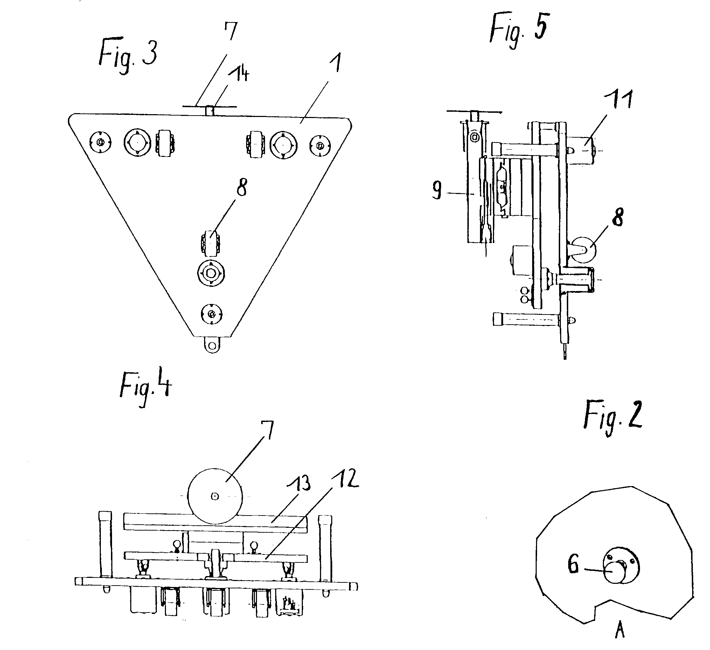

Um das Rohteil 1 in seiner räumlichen Lage exakt erfassen und beschreiben zu können, müssen wenigstens drei Bezugsmeßpunkte 4 vorhanden sein. Die Bezugsmeßpunkte 4 sind (Fig. 2) in diesem Beispiel als Kugeln 6 ausgebildet, die so befestigt sind, daß keine Beeinträchtigung für das Fertigteil im Rohteil zu erwarten ist.

Am Rohteil 2 sind im Hinblick auf eine eindeutige und genaue Justierung auf der Spannfläche der Bearbeitungsmaschine 7 Auf- und Anlageflächen 5 erforderlich und angebracht, wobei lediglich drei in der Fig. 1 sichtbar sind.

Nachdem die exakte Lage des Rohteiles 2 im Raum sensorisch durch die nicht dargestellte Meßeinrichtung erfaßt und über die Datenübertragungseinrichtung an die Datenverarbeitungseinrichtung übertragen wurde, wird die exakte Lage des Fertigteiles über die Datenverarbeitungseinheit bestimmt. Dementsprechend wird die Bearbeitungseinheit nacheinander an die Auf- und Anlageflächen 5 des Rohteiles 2 verfahren und so gesteuert, daß mit ihren Werkzeugen 7 - im vorliegenden Fall eine Schleifscheibe - die sieben Auf- und Anlageflächen 5 auf das Maß bearbeitet, das ein Ausrichten auf der Fläche der Bearbeitungsmaschine nicht mehr nötig ist.

Die Fig. 3 bis 5 zeigen die erfindungsgemäße Bearbeitungseinheit 1 in unterschiedlichen Ansichten.

Die Bearbeitungseinheit 1 wird auf Rollen 8 am Rohteil 2 so verfahren, daß die Auf- und Anlageflächen 5 in Reichweite der Bearbeitungswerkzeuge 7 stehen, welche im vorliegenden Fall eine Schleifscheibe darstellen. Diese wird durch einen Elektromotor 9 getrieben und mittels Zustelleinheiten 10 gegenüber den den Auf- und Anlageflächen 5 mittels der Signale der Datenverarbeitungseinheit so gesteuert, daß diese parallel und maßhaltig zu dem im Rohteil 2 befindlichen Fertigteil bearbeitet werden.

Um alle sieben Auf- und Anlageflächen 5 des Rohteiles bearbeiten zu können, die räumlich in x-, y-, z-Richtung liegen, muß das Bearbeitungswerkzeug 7 in unterschiedliche Richtungen dreh-, schieb- und schwenkbar sein. Dazu dient sowohl der Schlitten 13 des Kreuzsupports 14 als auch die Zustelleinheit 10. Das exakte Einstellen und Ausrichten der Bearbeitungseinheit 1 erfolgt über drei ausfahrbare Stellelemente 11 an der Unterseite der Bearbeitungseinheit 1.

### Liste der verwendeten Bezugszeichen

- 1: Bearbeitungseinheit
- 2: Rohteil
- 3: Stützelement
- 4: Bezugsmeßpunkt
- 5: Auf- und Anlageflächen
- 6: Kugel des Bezugsmeßpunktes
- 7: Bearbeitungswerkzeug / Schleifscheibe
- 8: Rolle
- 9: Elektromotor
- 10: Zustelleinheit
- 11: Stellelement
- 12: Kreuzsupport
- 13: Schlitten des Kreuzsupports
- 14: Werkzeugträger

## Patentansprüche

1. Verfahren zur Vorbereitung von Werkstücken für die Einzel- und Kleinserienfertigung durch Kontrolle des Rohteils auf Maßhaltigkeit, Anbringen von Bezugsmeßpunkten am Rohteil,
dadurch gekennzeichnet daß
- das Rohteil mit Auf- und Anlageflächen versehen wird,
- die räumliche Lage des Rohteils über die Bezugsmeßpunkte mittels Sensoren einer Meßeinrichtung erfaßt und mittels Datenbearbeitungseinheit gespeichert wird,
- die Daten des Rohteiles mit den Daten des im Rohteil befindlichen Fertigungsteiles verglichen werden und daraus Steuerdaten für die Bearbeitung der Auf- und Anlageflächen des Rohteiles gewonnen werden,
- wobei entweder das Rohteil oder das Werkzeug der Bearbeitungseinheit so gesteuert wird, daß die Auf- und Anlageflächen des Rohteiles achsparallel und maßhaltig zum Fertigteil bearbeitet werden, so daß das Rohteil ohne weiteres Einmessen auf die Auf- und Anlageflächen einer Bearbeitungsmaschine maßgenau abgelegt werden kann.

2. Verfahren nach Anspruch 1, dadurch gekennzeichnet, daß zur Bearbeitung der Auf- und Anlageflächen das Rohteil in seiner räumlichen Lage gegenüber der Bearbeitungseinheit über die Stützelemente verändert wird.

3. Verfahren nach Anspruch 1, dadurch gekennzeichnet, daß das Werkzeug der Bearbeitungseinheit räumlich gegenüber Auf- und Anlageflächen des feststehenden Rohteiles verändert wird.

4. Verfahren nach einem der Ansprüche 1 bis 3,
dadurch gekennzeichnet, daß
die Bearbeitung der Auf- und Anlageflächen durch geringe Zerspankräfte, wie Trennschleifen oder Zersägen, erfolgt.

5. Verfahren nach einem der Ansprüche 1 bis 3,
dadurch gekennzeichnet, daß
die Bearbeitung der Auf- und Anlageflächen durch schonende Bearbeitungsverfahren, wie Elektronenstrahl- oder -laser, erfolgt.

6. Vorrichtung zur Bearbeitung von Werkstücken für die Einzel- und Kleinserienfertigung, bestehend aus:
- Stützelementen (3) zum Halten des Rohteiles (2) im freien Raum,
- einer Meßeinrichtung mit Sensoren zum Erfassen der Lage des Rohteiles (2) im Raum über darauf angebrachten Bezugsmeßpunkten (2), wobei die Meßeinrichtung mit einer Datenübertragungs- sowie Datenverarbeitungseinheit gekoppelt ist,
- einer Bearbeitungseinheit (1) im Raum mit Werkzeug (7) zur Bearbeitung der Auf- und Anlageflächen (5) des Rohteiles, die von der Datenverarbeitungseinheit gesteuert wird.

7. Vorrichtung nach Anspruch 6, dadurch gekennzeichnet, daß mindestens drei Stützelemente (3) zum Halten des Rohteiles (2) angeordnet sind, die in ihrer Höhe entsprechend den Vorgaben der Datenverarbeitungseinheit gesteuert werden.

8. Vorrichtung nach einem der Ansprüche 6 und 7,
dadurch gekennzeichnet, daß
die Bezugspunkte (2) als Kugeln ausgeführt sind.

9. Vorrichtung nach einem der Ansprüche 6 bis 8,
dadurch gekennzeichnet, daß
die Bearbeitungseinheit (1) unter dem Rohteil (2) frei verfahrbar ist.

10. Vorrichtung nach einem der Ansprüche 6 bis 9,
dadurch gekennzeichnet, daß
die Bearbeitungseinheit (1) auf Rollen (8) verfährt, Stellelemente (11) aufweist und auf einem Kreuzsupport (12) einen Schlitten (13) trägt, der drehbar gelagert ist.

11. Vorrichtung nach einem der Ansprüche 6 bis 10,
dadurch gekennzeichnet, daß
der drehbar gelagerte Schlitten (13) ein um ± 90 ° lagenveränderbares Werkzeug (7) trägt.

12. Vorrichtung nach einem der Ansprüche 6 bis 11,
dadurch gekennzeichnet, daß
am Werkzeugträger (14) eine Zustelleinrichtung (10) angeordnet ist.
